(19) Europäisches Patentamt / European Patent Office / Office européen des brevets

(11) **EP 2 436 134 B1**

(12) **FASCICULE DE BREVET EUROPEEN**

(45) Date de publication et mention de la délivrance du brevet:
**03.05.2017 Bulletin 2017/18**

(21) Numéro de dépôt: **10716590.4**

(22) Date de dépôt: **29.03.2010**

(51) Int Cl.:
**H04L 1/00** *(2006.01)*  **H04L 1/18** *(2006.01)*

(86) Numéro de dépôt international:
**PCT/FR2010/050569**

(87) Numéro de publication internationale:
**WO 2010/125266 (04.11.2010 Gazette 2010/44)**

(54) **PROCÉDÉ DE TRANSMISSION DE DONNÉES DEPUIS UNE INFRASTRUCTURE D'UN RÉSEAU DE RADIOCOMMUNICATION VERS DES ÉQUIPEMENTS UTILISATEUR, ET ÉQUIPEMENTS POUR LA MISE EN OEUVRE DU PROCÉDÉ**

VERFAHREN ZUM SENDEN VON DATEN VON EINER FUNKKOMMUNIKATIONSNETZINFRASTRUKTUR ZU BENUTZERGERÄTEN UND GERÄTE ZUM IMPLEMENTIEREN DES VERFAHRENS

METHOD FOR TRANSMITTING DATA FROM A RADIO COMMUNICATION NETWORK INFRASTRUCTURE TO USER EQUIPMENT, AND EQUIPMENT FOR IMPLEMENTING THE METHOD

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **30.04.2009 FR 0952904**

(43) Date de publication de la demande:
**04.04.2012 Bulletin 2012/14**

(73) Titulaire: **ALCATEL LUCENT
92100 Boulogne-Billancourt (FR)**

(72) Inventeurs:
• **SAYADI, Bessem**
 **F-91620 Nozay (FR)**
• **LEPROVOST, Yann**
 **F-91620 Nozay (FR)**

(74) Mandataire: **Berthier, Karine et al
Alcatel-Lucent International
148/152, route de la Reine
92100 Boulogne-Billancourt (FR)**

(56) Documents cités:
**EP-A- 0 944 199      WO-A-99/30462
US-A1- 2008 130 602**

**Description**

La présente invention se rapporte à un procédé de transmission de données depuis une infrastructure d'un réseau de radiocommunication vers des équipements utilisateur, ainsi que des équipements pour la mise en oeuvre de ce procédé.

Elle trouve avantageusement application dans le contexte de transmission, par exemple en mode diffusion, vers des équipements utilisateur de contenus multimédia, par exemple vidéo, sans toutefois être limitée à ce contexte. Les systèmes DVB (en anglais « Digital Video Broadcasting »), standardisés par l'ETSI, sont des exemples de tels systèmes de diffusion. Les systèmes DVB-H, DVB-H2, DVB-NGH (« Next Generation Handheld ») et DVB-SH, en cours de définition ou de spécification, viennent compléter les fonctionnalités du système de diffusion terrestre DVB-T en offrant la possibilité de diffuser un contenu multimédia vers des terminaux mobiles. Les systèmes DVB-T et DVB-H sont décrit dans les documents ETSI TR 101 190 v1.2.1, intitulé « Digital Video Broadcasting (DVB) ; Implementation guidelines for DVB terrestrial services ; Transmission aspects », publié par l'ETSI en novembre 2004 et ETSI EN 302 304 v1.1.1, intitulé « Digital Video Broadcasting (DVB) ; Transmission System for Handheld Terminals (DVB-H) », et publié par l'ETSI en novembre 2004, respectivement, auxquels on pourra se reporter.

On se reportera par ailleurs aux documents suivants pour une description détaillée des systèmes DVB-SH : spécification technique TS 102 585 V1.1.1, "Digital video broadcasting (DVB); system specifications for satellite services to handheld devices (SH) below 3 GHz," Tech. Rep., publiée par l'ETSI en juillet 2007, rapport technique EN 302 583 V1.1.0, "Digital video broadcasting (DVB); framing structure, channel coding and modulation for satellite services to handheld devices (SH) below 3 GHz," publié par l'ETSI en janvier 2008, et rapport technique TM3731, "Digital video broadcasting (DVB); draft of DVB-SH implementation guidelines," Tech. Rep., publié par l'ETSI en mars 2008.

Dans le cadre de la transmission de contenus multimédia vers des mobiles, offrir une qualité de service perçue par l'utilisateur (qualité visuelle, faible taux d'interruption de service) satisfaisante reste la difficulté principale pour les opérateurs de service. Les phénomènes d'évanouissement (« fading ») que subit tout signal transmis sur un canal de propagation de l'interface air provoquent une dégradation de qualité du signal reçu contre laquelle les techniques de codage canal couramment employées dans les systèmes de radiocommunications numériques permettent dans une certaine mesure de se protéger.

Les techniques de codage canal comportent de manière classique une ou plusieurs étapes d'encodage/décodage afin de protéger les données à transmettre contre les erreurs de transmission, et une ou plusieurs étapes d'entrelacement des flux encodés de manière à obtenir qu'une erreur de transmission affecte des symboles distribués sur un ensemble donné au lieu d'affecter un groupe de symboles adjacents. L'encodage s'effectue selon un code correcteur d'erreurs (en anglais FEC, pour « Forward Error Protection »), comme par exemple un code de Reed-Solomon ou toute autre technique de codage par blocs.

Les codes de Reed-Solomon sont un exemple de codes en bloc utilisés pour le codage correcteur d'erreurs dans des systèmes de transmission de données. Les codes en bloc sont caractérisés par le fait que le code correcteur d'erreur est calculé sur un ensemble de symboles portant des données à protéger, constitutif d'un bloc, segment ou d'une trame de données selon la terminologie utilisée. Un code de Reed-Solomon est couramment désigné par un couple de paramètres (n,k) dans lequel n correspond à la taille en symboles (un symbole étant typiquement un octet de 8 bits, mais pouvant être aussi par exemple un quartet de 4 bits) du mot de code, et k à la taille du bloc de données à encoder, de sorte qu'un mot de code de taille n symboles correspond à k symboles de données et n-k symboles de redondance (aussi appelés symboles de parité). Le rapport k/n correspond au taux de codage du code de Reed-Solomon. Le nombre maximum d'erreurs sur symbole qui peuvent être corrigées par un code de Reed-Solomon (n,k) est donné par le rapport (n-k)/2. Le nombre maximum d'effacements de symbole qui peuvent être corrigées par un code de Reed-Solomon (n,k) est égal à n-k. Par exemple, pour une séquence de 100 octets à laquelle on adjoint 10 octets de redondance, le décodeur Reed-Solomon pourra récupérer jusqu'à 10 octets perdus (du fait, par exemple des phénomènes d'évanouissement évoqués plus haut). La capacité de correction de pertes de symboles est mesurée par le rapport $1/(n-k)$.

Lorsque les pertes de données ou les erreurs observées sur les données reçues dépassent la capacité de correction des codes correcteurs d'erreurs employés, on peut avoir recours à des retransmissions des données perdues ou erronées, par exemple dans le cadre de procédures de requête automatique de répétition (en anglais ARQ, pour « Automatic Repeat reQuest ») pour les systèmes de transmission de données utilisant des mécanismes d'acquittement.

Par ailleurs, les systèmes de diffusion actuels n'offrant par nature pas de voie de communication montante, dite « voie de retour », du terminal récepteur vers l'infrastructure de diffusion, ou bien une voie de retour d'un débit trop faible pour envisager de l'utiliser pour émettre des requêtes de retransmission de données qui s'avèrent efficaces, il est actuellement envisagé des systèmes faisant coopérer une infrastructure de diffusion et une infrastructure de réseau cellulaire de radiocommunication, de manière à profiter des débits offerts, notamment sur la voie montante, entre une station mobile et une infrastructure de réseau cellulaire de radiocommunication.

Le document US 2006128422 décrit un procédé d'interfonctionnement entre un système cellulaire et un système de diffusion basé sur la qualité de service observée par la station mobile. La station mobile négocie une qualité de service avec un fournisseur de service qui contrôle la fourniture des contenus multimédia. Le fournisseur de service décide de fournir les contenus multimédias à la station mobile par le biais du système cellulaire ou celui du système de diffusion.

Le document intitulé « A satellite based multicast layer architecture for mobile networks to provide efficient spectrum usage of IMT2000 bands » publié par Alcatel en janvier 2002 (et disponible à l'adresse URL cordis.europa.eu/ist/ka4/mobile/password/02/20_aspi_ecc_pt1_35.pdf) propose d'utiliser un réseau cellulaire pour effectuer la retransmission des portions perdues de flux de contenus multimédia diffusés par un système S-DMB (Satellite Digital Multimedia Broadcasting). Cette procédure est basée sur le protocole intitulé « Flute » (pour « File Delivery over Unidirectional transport »), et ne prend pas en compte les contraintes temps-réel imposées par la fourniture d'un flux multimédia vers un terminal mobile. Ce protocole, spécifié dans la RFC 3926 publiée par l'IETF, est aussi mentionné dans la spécification technique TS 102 472 intitulée « Digital Videao Broadcasting (DVB) ; IP Datacast over DVB-H ; Content Delivery Protocols » publié par l'ETSI, qui décrit un mécanisme de récupération des données, néanmoins encore dans un contexte de fourniture de services non temps-réel. Ces contraintes se retrouvent cependant lorsqu'il s'agit de mettre en oeuvre un procédé de correction d'erreurs efficace qui optimise l'expérience utilisateur en augmentant la qualité de service perçue.

L'article intitulé « Affordable mobile TV services in hybrid cellular and DVB-H systems », publié par D. Gomez-Barquero et al., dans le numéro d'avril 2007 de IEEE Network, vol. 21, no. 2, pages 34-40, décrit un procédé de récupération des données perdues, basé sur un code correcteur d'erreur de type Raptor appliqué au niveau de la couche application, et suggère par ailleurs l'utilisation d'un réseau cellulaire de radiocommunication de troisième génération pour effectuer les retransmissions des données perdues par le système de diffusion DVB-H. Il prévoit en outre la transmission d'informations de redondance supplémentaires, par le réseau de diffusion ou le réseau cellulaire, en dehors des périodes de transmission dédiées au contenu multimédia auquel elles sont associées.

Le document WO99/30462, 17 Juin 1999, révèle un procédé et dispositif pour déterminer la réception d' une trame, estimer la possibilité de correction des erreurs et d'émettre une requête de retransmission. Ces approches présentent l'inconvénient que l'ensemble des données attendues par l'application les exploitant doivent être reçues avant de pouvoir être exploitées. De plus, elles sont mal adaptées aux transmissions par satellite, qui peuvent subir des évanouissements d'une durée longue (de l'ordre d'une seconde) par rapport à ce qu'on observe pour les systèmes de transmissions sans-fil terrestres.

Un but principal de l'invention est d'apporter une solution selon les revendications annexées qui soit plus performante à cet égard.

D'autres particularités et avantages de la présente invention apparaîtront dans la description ci-après d'exemples de réalisation non limitatifs, en référence aux dessins annexés, dans lesquels :

- la figure 1 montre l'architecture d'un système hybride de transmission de contenu multimédia auquel l'invention peut avantageusement s'appliquer;
- la figure 2 est un schéma synoptique d'un noeud IPE d'une infrastructure de réseau de radiocommunication DVB;
- la figure 3 illustre une étape de l'encodage correcteur d'erreur dans une infrastructure de réseau de radiocommunication DVB;
- les figures 4a, 4b, 4c et 4d illustrent le processus d'encodage/décodage correcteur d'erreur MPE-IFEC dans une infrastructure de réseau de radiocommunication de type DVB-SH;
- la figure 5 est un schéma synoptique d'un équipement utilisateur mettant en oeuvre la présente invention selon un mode de réalisation particulier ;
- la figure 6 représente de manière schématique un exemple d'algorithme pour la mise en oeuvre de l'invention selon un mode de réalisation particulier.

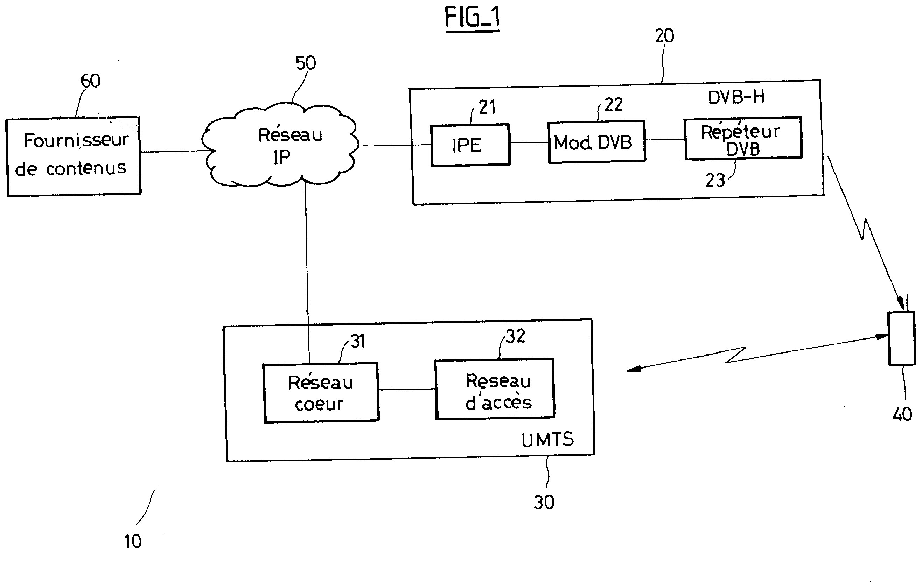

La figure 1 montre un système 10 qui comprend un réseau 20 de radiocommunication de type DVB-H ou DVB-SH, et un réseau 30 de radiocommunication cellulaire de type UMTS.

Le réseau 30 cellulaire de radiocommunication comprend un réseau coeur UMTS 31, connecté à un ou plusieurs réseaux fixes 50 d'une part, ainsi qu'à un réseau d'accès radio UMTS 32 (UTRAN, « UMTS Radio Access Network ») d'autre part, au moyen d'une interface dite *Iu*. Le réseau UTRAN 32 comprend des stations de base, appelées « Node-B », réparties sur le territoire de couverture du réseau UTRAN, et capables de communiquer par radio avec les équipements utilisateurs 40. Il comprend par ailleurs des équipements de contrôle de réseau radio, ou RNC ("Radio Network Controller"), chaque RNC étant relié à une ou plusieurs stations de base au moyen d'une interface dite *Iub.*

Le réseau 20 comprend un noeud IPE 21 (« IP Encapsulateur ») qui transpose un flux d'entrée de datagrammes IP (« Internet Protocol ») transportant les contenus multimédia en un flux de transport DVB en utilisant un procédé dit d'encapsulation multi-protocole (en anglais MPE, pour « Multi-Protocol Encapsulation »). Le flux de transport DVB est ensuite transmis au modulateur DVB 22, après avoir éventuellement été multiplexé avec d'autres flux de service DVB. Le modulateur DVB 22 met en forme les signaux reçus en vue de leur émission sur l'interface air, éventuellement par l'intermédiaire du répéteur 23, vers les équipements utilisateurs 40.

Le réseau 20 et le réseau 30 sont connectés à un réseau IP 50, par l'intermédiaire du noeud IPE 21 et du réseau coeur 31, respectivement. Des contenus transmis vers les équipements utilisateur sont fournis par un noeud fournisseur de contenus 60, connecté lui aussi au réseau IP 50.

L'équipement utilisateur 40 est propre à communiquer avec le réseau 20 et avec le réseau 30. On considère, dans ce qui suit, à titre d'exemple non limitatif, le cas d'un terminal de communication multi-mode UMTS/DVB. Mais l'invention n'est pas limitée à ce type d'équipement utilisateur et trouve à s'appliquer à tout équipement de communication fixe ou mobile (ou portable ou encore cellulaire) apte à communiquer avec une infrastructure d'un réseau de radiocommunication transmettant des données vers des équipements utilisateur, lesdites données étant portées par une séquence de trames transmises vers les équipements utilisateur. Par conséquent, il pourra également s'agir d'un téléphone fixe, d'un ordinateur fixe ou portable, d'un récepteur de contenus multimédia en couches (par exemple un décodeur, une passerelle résidentielle (ou « residential gateway ») ou un STB (« Set-Top Box »)), dès lors qu'il est équipé de moyens de communication, éventuellement radio ou satellitaires, aptes à la communication avec une infrastructure de réseau de communication transmettant des données vers des équipements utilisateur, lesdites données étant portées par une séquence de trames transmises vers les équipements utilisateur. La transmission des signaux par le réseau 20 de diffusion de contenus multimédia s'effectue selon un schéma de multiplexage temporel (TDM, « Time Division Multiplex ») de rafales (en anglais « bursts »), une rafale étant émise sur une tranche temporelle d'émission appelée « Time Slot ». Cette technique d'émission des données en rafale permet notamment d'économiser la consommation en puissance des équipements utilisateurs, qui peuvent être des terminaux mobiles dont la batterie est une ressource critique qu'il convient d'économiser autant qu'il se peut.

La chaine de transmission du réseau 20 DVB comporte des éléments des couches 1 et 2 du modèle ISO. La couche 2 (liaison de données) comprend un étage d'encodage/décodage correcteur d'erreurs (encodage de type FEC) permettant de protéger les erreurs affectant des ensembles de données parmi les données à transmettre. Cette couche liaison de données se trouve par exemple dans le noeud IPE 21. La couche 1 (couche physique) comprend un étage de codage canal et un étage de modulation, et est implémentée par exemple au niveau du noeud Modulateur DVB 21.

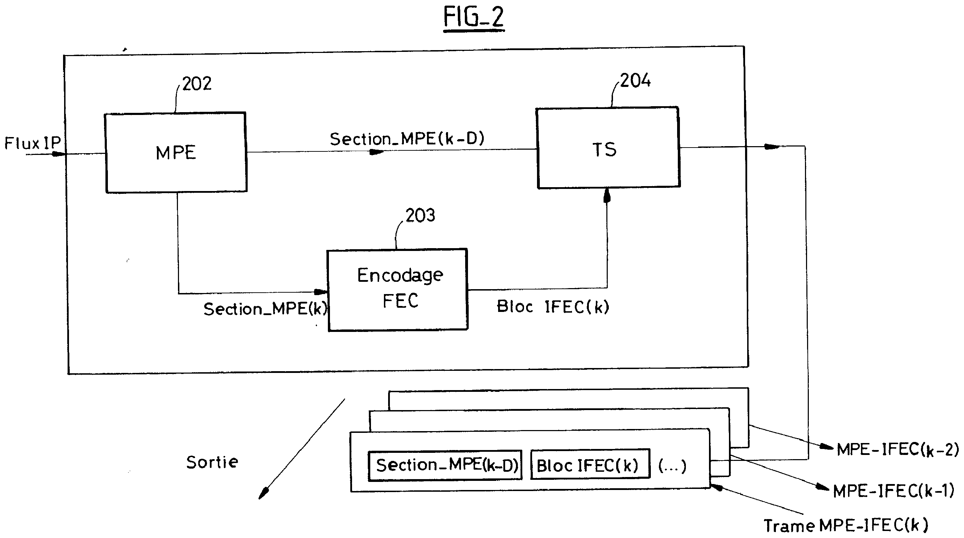

La figure 2 illustre les différentes opérations effectuées au sein d'un noeud IPE 201 dans le cadre de l'exemple de réalisation décrit ci-après.

Un flux entrant de datagrammes (ou paquets) IP est traité par des moyens d'encapsulation, qui encapsulent les datagrammes IP entrant dans des blocs, appelés sections MPE (« MPE sections »). Chaque section MPE contient un en-tête, un datagramme IP encapsulé, ainsi que des bits de parité obtenus par calcul d'un code de détection d'erreur CRC (en anglais « Cyclic Redundancy Check ») sur le datagramme IP et l'en-tête. Ces moyens d'encapsulation correspondent au module MPE 202 sur la figure 2, et génèrent une séquence de sections MPE d'indice k Section_MPE(k). Les sections MPE sont transmises par un premier flux au module TS 204 de génération trames MPE-IFEC, et par un second flux au module d'encodage/décodage correcteur d'erreurs 203. Sur la figure 2, la section MPE transmise directement au module TS 204 est générée avant celle transmise au module d'encodage/décodage correcteur d'erreur, les deux sections étant décalées l'une par rapport à l'autre d'un indice D, D représentant un retard introduit par le temps de traitement d'encodage/décodage correcteur d'erreur, exprimé en nombre de sections MPE, entre la réception d'une section MPE, et la génération en sortie d'une trame MPE-IFEC (D étant typiquement égal à 0). Le module d'encodage/décodage correcteur d'erreurs 203 génère des informations de redondance IFEC(k) correspondant aux données portées par la section MPE en entrée Section_MPE(k).

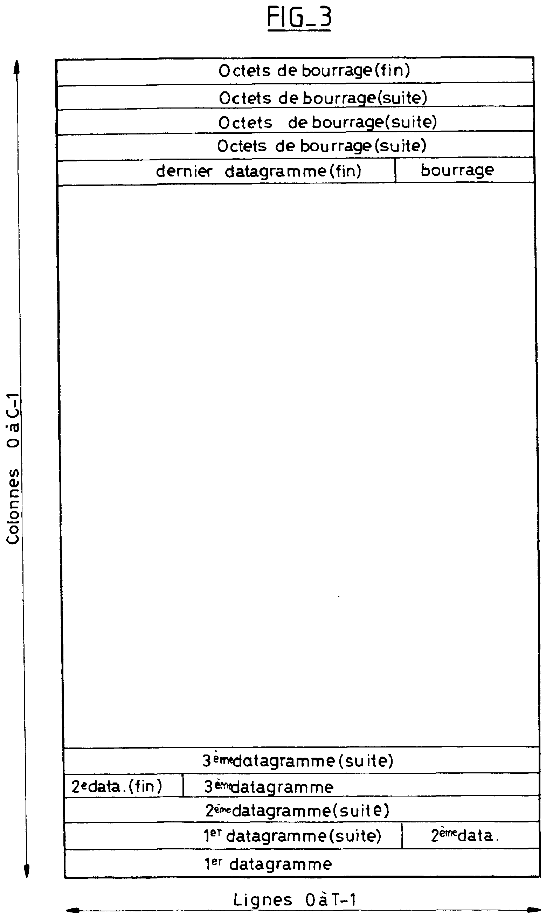

La figure 3 illustre une première étape de la procédure d'encodage/décodage correcteur d'erreurs spécifiée pour les systèmes DVB-SH, dans laquelle les données des sections MPE sont organisées en mémoire selon une structure logique matricielle appelée ADST (pour « Application Data Sub-Table »). Les symboles (dans l'exemple particulier de réalisation de l'invention décrit ci-après, on considère qu'un symbole est un octet binaire) d'un ensemble de sections MPE en entrée de l'encodeur, correspondant à un ensemble de paquets de données multimédia à encoder, sont organisés en mémoire selon une matrice logique de C colonnes représentée sur la figure 3 (C = 191 pour DVB-H ou DVB/SH), en remplissant la matrice logique 101 avec les octets de la séquence d'entrée colonne par colonne, comme illustré sur la figure 3. Dans ce qui suit, on entend par « matrice », « matriciel » ou « matrice logique », une organisation logique des données aux fins d'un traitement spécifique qui ne présuppose en rien de l'organisation des données dans une mémoire lorsque le traitement est effectivement mis en oeuvre au sein d'un dispositif. Les données à encoder d'un ensemble sections MPE portant des datagrammes IP sont ainsi organisées logiquement en mémoire selon une matrice 101 appelée ADST (« Application Data Sub-Table »). Le nombre T de lignes de la matrice logique ADST dépend de la longueur de la séquence d'entrée (T est par exemple défini dans les spécifications DVB-H et DVB-SH comme pouvant prendre les valeurs 256, 512, 768 ou 1024), et est choisi de manière à ce que cette longueur soit inférieure ou égale à la capacité $C \times T$ en nombres de symboles de la table ADST. Des octets de bourrage sont éventuellement insérés dans la table ADST, lorsque la longueur de la séquence d'entrée ne coïncide pas exactement avec les dimensions de la table, comme illustré sur la figure 3.

L'encodage correcteur d'erreur utilisé dans les systèmes DVB-SH et mis en oeuvre dans le module d'encodage/décodage FEC 203 comprend un entrelacement par blocs des données de la matrice ADST aux fins de remplir des matrices d'encodage/décodage (en anglais « Encoding Matrix », ou EM), chacune constituée de B ensembles de colonnes provenant chacun d'une table ADST (B≥1), et au sein desquelles sont calculées les informations de redondance. Un deuxième niveau d'entrelacement peut éventuellement être obtenu du fait que les données de redondance produites par l'encodeur correcteur d'erreur sont distribuées sur S trames MPE-IFEC de transmission sur l'air interface, dans le cas où $S > 1$. Ces deux modes d'entrelacement peuvent être cumulés, ou être utilisés comme alternatives, l'objectif étant d'assurer une distribution lors de leur transmission sur l'interface air des informations de redondance générées à partir de blocs de données, afin d'éviter qu'elles ne soient transmises sur l'interface air avec les données sur lesquelles elles sont calculées, ce qui rendrait l'ensemble vulnérable aux évanouissements. On peut déterminer la profondeur d'entrelacement M en fonction de la profondeur d'entrelacement B selon le premier mode, et de la profondeur d'entrelacement S selon le deuxième mode, par la formule suivante :

$$M = B + \max(0 ; S-D) + \max(0 ; D-B)$$

Où l'on voit que lorsque D = 0, M = B+S.

Ainsi, le premier mode est actif lorsque la profondeur d'entrelacement B est choisie strictement supérieure à 1. On peut aussi activer le deuxième mode, sans activer le premier ou bien en l'associant à celui-ci, lorsque la profondeur d'entrelacement S est choisie strictement supérieure à 1. Dans le cas où les deux modes sont simultanément actifs, la profondeur d'entrelacement total (pour les cas où D = 0) M est supérieure ou égale à 2.

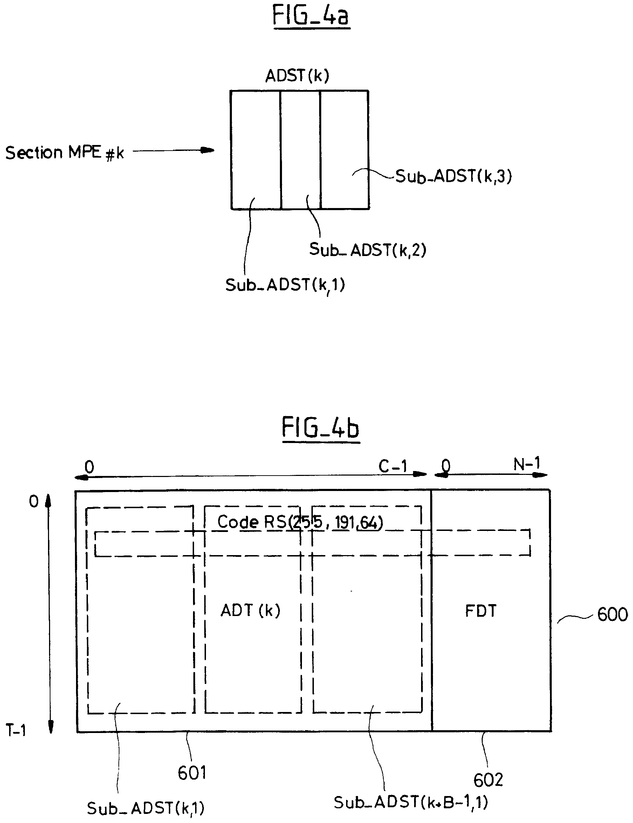

La figure 4b illustre l'application de l'encodage correcteur d'erreur au sein de matrices dites d'encodage/décodage EM. Les colonnes de chaque matrice ADST sont distribuées sur M matrices d'encodage/décodage EM(m). La matrice d'encodage/décodage 600 comprend une sous-matrice de symboles de données 601 (sur la figure, ADT pour « Application Data Table ») et une sous-matrice de symboles de redondance 602 (sur la figure, FDT pour « FEC Data Table »). La sous-matrice de symboles de données ADT 601 comprend C colonnes et T lignes, tandis que la sous-matrice de symboles de redondance FDT 602 comprend N colonnes et T lignes. La sous-matrice de symboles de données ADT 601 comprend par ailleurs B blocs, chaque bloc comprenant un nombre prédéterminé de colonnes de symboles de données provenant d'une même table ADST. Par exemple, lorsque B est choisi parmi les diviseurs de C, on peut scinder les colonnes de la matrice ADST(k) en B blocs contigus comme illustré sur la figure Sub_ADST(k, r), avec r allant de 1 à B. Le premier bloc de cette séquence Sub_ADST(k,1) peut former l'un des blocs d'une table ADT(k). L'entrelacement des données s'effectue en insérant ensuite au sein de la table ADT(k) le deuxième bloc de la séquence [Sub_ADST(k+1,r)]r=1...B correspondant à la matrice ADST(k+1) formée avec les données de la séquence de datagrammes IP de numéro de séquence k+1 (séquence reçue par le module MPE après celle de numéro de séquence k), et ainsi de suite. Dans l'exemple illustré sur la figure 4b, la matrice de données entrelacées est formée par 3 blocs, Sub_ADST(k,1), Sub_ADST(k+1,1), et Sub_ADST(k+2,1) provenant respectivement des tables ADST(k), ADST(k+1), et ADST(k+2).

Ce procédé d'entrelacement peut être exprimé par l'équation suivante, en considérant en entrée la colonne d'indice j de la table ADST(k), et en sortie le numéro d'indice m de la matrice d'encodage/décodage EM(m), dont la table de données ADT recevra les données de la colonne d'indice j :

$$m = adt\_index(k, j) = \big(k + j[B]\big)[M]$$

où p[q] désigne l'opération p modulo q

Considérons à titre d'exemple illustratif une section MPE d'indice k = 9 reçue par le module MPE 202, dont les données sont insérées comme expliqué ci-dessus au sein d'une table ADST(9) comprenant C=23 colonnes. Les paramètres B et M étant fixés respectivement à 4 et à 6, on peut donc distribuer les données des colonnes de la table ADST(9) sur 4 parmi 6 matrices d'encodage/décodage EM(m) en appliquant la formule de distribution précédente, ce qui conduit à :

$$adt\_index(9,0) = (9 + 0[4])[6] = 3$$
$$adt\_index(9,1) = (9 + 1[4])[6] = 4$$
$$adt\_index(9,2) = (9 + 2[4])[6] = 5$$
$$adt\_index(9,3) = (9 + 3[4])[6] = 0$$
$$adt\_index(9,4) = (9 + 4[4])[6] = 3$$
$$...$$
$$adt\_index(9,22) = (9 + 22[4])[6] = 5$$

Dans cet exemple, les 23 colonnes de la séquence k=9 sont insérées dans les 4 matrices d'encodage/décodage d'indices respectifs : 0, 3, 4 et 5. Chaque table ADT d'une des matrices d'encodage/décodage d'indices 3, 4 et 5 recevra 6 colonnes de la section MPE k=9 d'entrée, tandis que la table ADT(0) de la matrice d'encodage/décodage EM(0) n'en recevra que 5.

Les données de la matrice logique ADT(m) 601 sont encodées ligne par ligne, par calcul d'un vecteur de symboles de parité pour chaque ligne. L'un des objets de cette organisation logique matricielle est l'application d'un code en bloc aux vecteurs de données constituées des lignes de la matrice logique ADT(m) 601. L'encodage des lignes peut s'effectuer selon toute méthode de codage en bloc connue en soi, comme par exemple un encodage de type Reed-Solomon ou LDPC. On adjoint ainsi à la matrice logique ADT une matrice logique de symboles de parité, appelée FDT, dont chaque ligne correspond à un vecteur de symboles de parité résultant d'un encodage, par exemple de type Reed-Solomon (Q, P), de la ligne correspondante de la matrice logique ADT(m) 601. Le nombre maximum de colonnes de la matrice logique FDT 602, noté $N_{max}$, est lié aux caractéristiques du code correcteur d'erreur employé, et dans le cas d'un code de Reed-Solomon de type (Q,P) est égal à Q - P (La valeur 255 est spécifiée pour les systèmes DVB-H ou DVB/SH). Le nombre de colonnes de la matrice FDT est fixé à N, ce qui permet de contrôler la quantité d'informations de redondance envoyées sur l'interface air, et qui peut être choisi strictement inférieur au nombre maximum $N_{max}$.

Comme expliqué ci-dessus, un deuxième niveau d'entrelacement peut éventuellement être obtenu en distribuant les données de redondance de la matrice logique FDT 602 sur une pluralité de trames de sortie d'encodeur MPE-IFEC. Une trame MPE-IFEC transportant des données de la séquence d'ordre k contient ainsi des données de redondance provenant d'une pluralité S de matrices logiques FDT(m) 602 sur l'ensemble des M matrices d'encodage/décodage EM(m). Un exemple d'algorithme de distribution est fourni par la formule suivante, qui retourne les indices des matrices d'encodage/décodage à partir desquelles on va construire le bloc IFEC(k) qui sera inséré dans la trame de sortie MPE-IFEC d'indice k :

$$ifdt\_index(k, j) = (k - j[S] + M - 1)[M]$$

pour j allant de 0 à N-1.

Par exemple, une trame MPE-IFEC d'indice k=9, transportant N = 12 colonnes de symboles de redondance, comprendra les informations de redondance extraites de colonnes des matrices d'encodage/décodage d'indice 1 et 2 (EM(1) et EM(2)) comme le montrent les équations suivantes :

$$ifdt\_index(9,0) = (9 - 0[2] + 6 - 1)[6] = 2$$
$$ifdt\_index(9,1) = (9 - 1[2] + 6 - 1)[6] = 1$$
$$ifdt\_index(9,2) = (9 - 2[2] + 6 - 1)[6] = 2$$
$$ifdt\_index(9,3) = (9 - 3[2] + 6 - 1)[6] = 1$$
$$\vdots$$
$$ifdt\_index(9,11) = (9 - 11[2] + 6 - 1)[6] = 1$$

Revenant à la figure 2, le module TS 204 de génération de trames MPE-IFECs produit des trames MPE-IFEC qui comprennent des sections MPE associées avec les informations de redondance (blocs IFEC(k) comprenant N colonnes extraites de sous-matrices FDT de matrices d'encodage/décodage EM(m)) produites par le module 203 d'encodage/décodage correcteur d'erreurs. Par exemple, la trame MPE-IFEC d'indice k comprendra les données de la section MPE d'indice k-D et les informations de redondance produites par l'encodeur 203 à partir de la section MPE d'indice k.

Revenant à la figure 1, les trames MPE-IFEC de la séquence produite par le module IPE 21 sont transmises au modulateur DVB 22 pour être mises en forme en vue d'être émises, éventuellement par l'intermédiaire du répéteur 23, sur l'interface air vers l'équipement utilisateur 40.

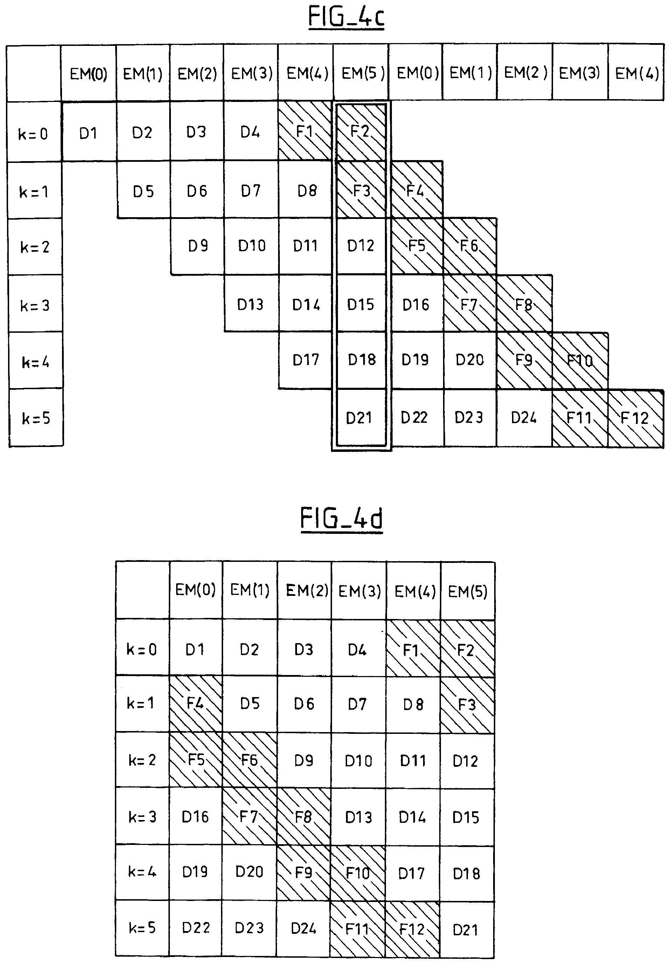

Les figures 4c et 4d illustre la structure logique des matrices d'encodage/décodage dans une mémoire au sein d'un équipement récepteur. Chaque figure illustre 6 trames MPE-IFEC (indexées par k allant de 0 à 5) reçues et stockées en mémoire pour construire 6 matrices d'encodage/décodage EM(0) à EM(5). Les blocs D1 à D24 désignent des blocs matriciels contenant des données issus des sections MPE contenues dans les trames MPE-IFEC reçues. Sur la figure 4c, chaque ligne correspond à une trame MPE-IFEC d'indice k reçue, les blocs $D_i$ désignant les données utiles (en anglais « payload »), tandis que les blocs $F_j$ désignent les informations de redondance. Par exemple, l'ensemble (D1, D2, D3, D4, F1, F2) correspond à la trame MPE-IFEC(k=0), tandis que l'ensemble (D13, D14, D15, D16, F7, F8) correspond à la trame MPE-IFEC(k=3). Sur la figure 4d, chaque colonne correspond à une matrice d'encodage/décodage, chacune composée de 6 blocs. La figure 4c montre de même une matrice d'encodage/décodage EM(5) composée des 4 blocs de données D12, D15, D18 et D21 et des deux blocs d'informations de redondance F2 et F3. L'espace mémoire dans lequel sont stockées les matrices d'encodage/décodage est rempli en opérant une permutation circulaire sur les positions des blocs des trames MPE-IFECs entrantes, de manière à ce que le premier bloc d'une trame MPE-IFEC soit stocké en mémoire sur la matrice d'encodage/décodage d'indice immédiatement suivant celui de la matrice d'encodage/décodage dans laquelle a été stockée le premier bloc de la trame MPE-IFEC immédiatement précédant dans la séquence. La figure 4d montre l'état d'une mémoire organisée comme une matrice en blocs comprenant 6 x 6 blocs, chaque « colonne -bloc » correspondant à une matrice d'encodage/décodage.

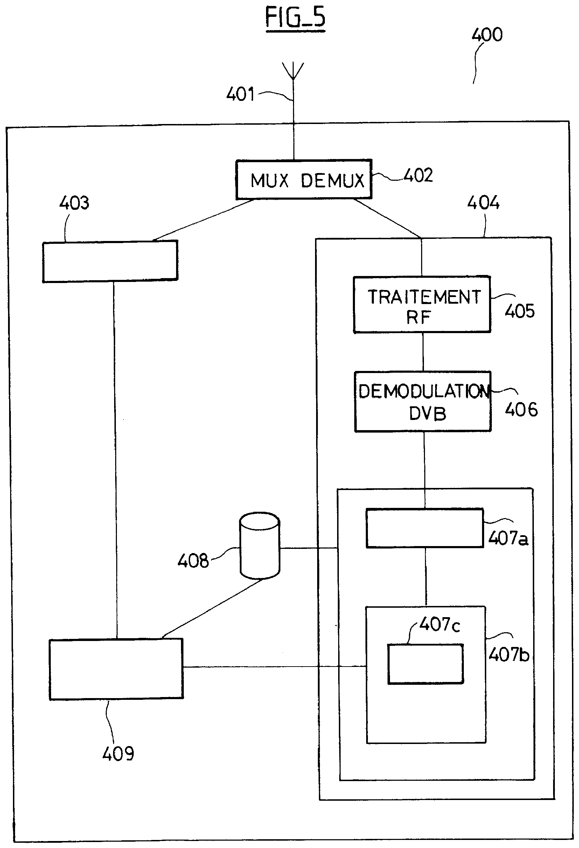

La figure 5 est un schéma synoptique d'un équipement utilisateur mettant en oeuvre la présente invention selon un mode de réalisation particulier décrit ci-après.

L'équipement utilisateur 400 représenté sur la figure 5 correspond aussi à l'équipement utilisateur 40 de la figure 1 en ce qu'il est multi-mode, c'est-à-dire propre à communiquer avec le réseau 20 et avec le réseau cellulaire de radiocommunication 30. Il comprend pour ce faire des moyens 402 de multipexage/démultiplexage des signaux reçus par l'intermédiaire des moyens antenne 401 d'une part du réseau de diffusion DVB, et d'autre part du réseau cellulaire de radiocommunication. Les moyens 402 de multiplexage/demultiplexage transmettent les signaux reçus du réseau de diffusion vers des moyens 404 de traitement réception réseau de diffusion, et les signaux reçus du réseau de radiocommunication cellulaire vers des moyens 403 de traitement émission/réception réseau de radiocommunication cellulaire. Les moyens 403 de traitement émission/réception réseau de radiocommunication cellulaire comprennent des moyens de traitement radio ainsi que des moyens de traitement du signal en bande de base. Les moyens de traitement radio effectuent l'ensemble des traitements radio (amplification, filtrage, égalisation, démodulation...) sur les signaux reçus du réseau de radiocommunication cellulaire sur l'antenne de réception (moyens antenne 401), et transmettent aux moyens de traitement en bande de base un signal numérique démodulé en bande de base. Les moyens 404 de traitement réception réseau de diffusion comprennent des moyens 405 de traitement radio et des moyens 406 de démodulation du signal diffusé. Les moyens 405 de traitement radio effectuent l'ensemble des traitements radio sur les rafales reçues du réseau de diffusion sur les moyens antenne 401, et transmettent aux moyens 406 de démodulation signaux reçus transportant les rafales. Les moyens 406 de démodulation transmettent aux moyens 407 de désencapsulation IP des rafales de données après démodulation des signaux reçus transportant les rafales. Les moyens 407 de désencapsulation IP se chargent des traitements des couches 1 (couche physique) et 2 (liaison de données), et comprennent des moyens 407a de traitement couche physique et des moyens 407b de traitement couche liaison de données. On s'intéresse plus particulièrement dans la suite aux traitements effectués par la couche 2, et plus spécifiquement aux traitements effectués par les moyens 407c de décodage compris dans les moyens 407b de traitement couche liaison de données, en coopération avec la mémoire 408.

Les moyens 407a de traitement couche physique traitent les signaux démodulés transportant les rafales reçues des moyens 406 de démodulation pour produire une séquence de trames MPE-IFEC. Les trames MPE-IFEC reçues des moyens 407a de traitement couche physique par les moyens 407b de traitement couche liaison de données sont consignées en mémoire 408 pour être ensuite traitées par les moyens 407c de décodage afin de déterminer si elles ont été ou non correctement reçues. Si une trame MPE-IFEC est correctement reçue et qu'une section MPE décodée a pu être produite, les données transportées par la section MPE sont transmises aux moyens 409 de lecture de contenu multimédia au moyen par exemple d'un bus de transmission de données interne, éventuellement par l'intermédiaire de la mémoire 408. Si la trame MPE-IFEC n'est pas correctement reçue, elle pourra éventuellement être récupérée soit par correction des erreurs qui l'affectent grâce aux informations de redondance portées par les trames MPE-IFEC suivantes et/ou précédentes, dans la limite de la capacité de correction du code employé. Au-delà, les données perdues pourront être requises par le biais d'une requête en retransmission déclenchée suffisamment rapidement pour que les moyens 409 de lecture de contenu multimédia puissent en bénéficier. Dans ce dernier cas, la requête en retransmission sera émise par les moyens 403 de traitement en émission/réception réseau cellulaire de radiocommunication cellulaire, en y adjoignant un identifiant des données à ré-émettre, par exemple un numéro de séquence de trame MPE-IFEC.

Il sera possible dans certaines situations de récupérer, grâce aux informations de redondance portées par les trames MPE-IFEC, les données perdues quand bien même celles-ci pourraient correspondre à plusieurs sections MPE consécutives, à la condition que la quantité de données perdues n'excède pas la capacité de correction du code correcteur d'erreur utilisé pour l'encodage correcteur d'erreurs des sections MPE. La réception, entachée ou non d'erreurs, ou l'absence de réception, d'une trame MPE-IFEC, permet d'estimer une probabilité de correction des erreurs affectant les données portées par une trame MPE-IFEC précédente dans la séquence de trames émises. Lorsque la trame MPE-IFEC(k) est correctement reçue, les informations de redondance IFEC(k) ainsi que les données de la section MPE portées par cette trame MPE-IFEC sont exploitées pour générer en mémoire 408 les données de matrices d'encodage/décodage EM(m). On considère par ailleurs que la probabilité p(k) de correction des erreurs affectant cette trame MPE-IFEC est maximale, c'est-à-dire égale à 1. A l'inverse, lorsque la trame MPE-IFEC(k) est incorrectement reçue, on considère que toutes les données et informations de redondance qu'elle portait sont perdues, et on estime une probabilité p(k) de correction des erreurs affectant cette trame MPE-IFEC. En outre, dans les cas où les informations de redondance portées par une trame MPE-IFEC en cours de traitement sont relatives aux données portées par les trames précédentes (et aussi éventuellement suivantes) dans la séquence, la qualité de réception de la trame MPE-IFEC en cours influencera la probabilité de correction des erreurs affectant les données portées par certaines au moins des trames précédentes. En effet, les informations de redondance étant générées sur des ensembles de données entrelacés et/ou étant distribuées sur une pluralité de trames MPE-IFEC, la qualité de réception d'une trame MPE-IFEC et des informations de redondance qu'elle transporte influera sur la capacité à corriger les erreurs affectant les données des trames précédentes, cette capacité étant mesurée par le paramètre p(k).

Dans la suite, on donne un exemple de calcul de probabilité de correction des erreurs affectant les données portées par une trame MPE-IFEC pour un système DVB-SH avec encodage MPE-IFEC tel que décrit ci-dessus, et notant k l'indice de la trame MPE-IFEC en cours de traitement, et l'indice de la matrice d'encodage/décodage (en l'occurrence de décodage) EM(m), m allant de 0 à M-1 où M est la profondeur d'entrelacement utilisé pour l'encodage correcteur d'erreurs IFEC. En faisant l'hypothèse d'un temps de traitement suffisamment faible pour considérer que D=0, l'indice k de la trame MPE-IFEC en cours de traitement est le même que l'indice de la section MPE que l'on cherche à reconstruire. Conformément au procédé d'encodage/décodage expliqué ci-dessus, chaque matrice d'encodage/décodage permet de corriger B sous-blocs Sub_ADST(k,j) correspondant à une section MPE Section_MPE(k). Un exemple d'estimation de la probabilité p(k) de correction des erreurs affectant les données portées par la trame MPE-IFEC(k) (c'est-à-dire, lorsque D = 0, les données de la section MPE Section_MPE(k)), lorsque la trame MPE-IFEC en cours de traitement MPE-IFEC(k) est perdue, est donnée par :

$$p(k) = \prod_{j=0}^{B-1} p(Sub\_ADST(k,j))$$

La probabilité de correction des erreurs dans le bloc Sub_ADST(k,j), j allant de 0 à B-1, est liée à la probabilité de décoder avec succès les éléments de la matrice d'encodage/décodage EM(m), avec m allant de 0 à B-1, et on a :

$$p(k) = \prod_{j=0}^{B-1} p(EM(adt\_index(k,j)))$$

Dans un système DVB_SH utilisant un encodage correcteur d'erreurs de type Reed-Solomon, les informations de redondance sont calculées sur les éléments de la matrice ADT (comprenant 191 colonnes), en considérant les éléments de chaque ligne à partir desquelles les informations de redondance (aussi appelées informations de parité) sont générées. Pour un code de Reed-Solomon de type RS (255, 191, 64), on génère au plus 64 symboles de parité pour 191 symboles encodés, constituant ainsi si l'on considère chaque ligne de la matrice ADT, une matrice FDT de $N_{max}$ = 64 colonnes. Il est donc nécessaire que l'équipement utilisateur reçoive certaines au moins parmi ces 64 colonnes d'information de redondance pour pouvoir être en mesure de corriger des erreurs affectant les données de la matrice ADT. L'encodage correcteur d'erreurs de type Reed-Solomon étant effectué au sein des matrices d'encodage/décodage EM(m), les performances de corrections des erreurs affectant les données de ces matrices correspond aux performances du code de Reed-Solomon utilisé du fait de ses propriétés.

Ainsi, un estimateur de chaque $p(EM(adt\_index(k,j))$, est donné par la formule suivante :

$$p\big(EM\big(adt\_index(k,j)\big)\big) = \begin{cases} 1 - \mathrm{Pr}\,ob\bigg(I_{card\big(\Omega_f^k\big)} > \big(Ca - card\big(\Omega_p^k\big)\big)\bigg) & if \quad card\big(\Omega_p^k\big) < Ca \\ 0 & autrement \end{cases}$$

avec :

$$\mathrm{Pr}\,ob\bigg(I_{card\big(\Omega_f^k\big)} > \big(Ca - card\big(\Omega_p^k\big)\big)\bigg) = \sum_{s=Ca-card\big(\Omega_p^k\big)+1}^{card\big(\Omega_f^k\big)} \binom{card\big(\Omega_f^k\big)}{s} \big(P_{link}\big)^s \big(1 - P_{link}\big)^{\big(card\big(\Omega_f^k\big)-s\big)}$$

et où :

$\Omega_p^k$ désigne l'ensemble des colonnes reçues et déclarées perdues, situées, dans la matrice d'encodage/décodage EM considérée, dans le(s) bloc(s) précédant immédiatement le bloc *Sub_ADST(k,j)* avec j allant de 0 à B - 1 de la trame MPE-IFEC(k) (sur la figure 4c, pour la matrice de décodage EM(5), cela correspond, eu égard au bloc de données référencé D15 (reçu avec la trame MPE-IFEC d'indice k=3 sur la figure), à l'ensemble des colonnes reçues et déclarées perdues situées dans le bloc de données référencé D12),

$\Omega_f^k$ désigne l'ensemble des colonnes non encore reçues et nécessaires pour remplir la matrice d'encodage/décodage EM considérée, dans le(s) bloc(s) suivant le bloc *Sub_ADST(k,j)* avec j allant de 0 à B - 1 de la trame MPE-IFEC(k) (sur la figure 4c, pour la matrice de décodage EM(5), cela correspond, eu égard au bloc de données référencé D15 (reçu avec la trame MPE-IFEC d'indice k=3 sur la figure), à l'ensemble des colonnes non encore reçues situées dans les blocs de données référencés D18 et D21),

$I_n$ désigne une variable aléatoire représentant le nombre d'effacement de paquets dans un groupe de n paquets;
*Plink* désigne le taux d'erreur trame sur le canal;

$\binom{n}{j}$ désigne le nombre de tirages possibles sans répétition de j objets parmi n ;

*Ca* désigne la capaciété de correction du code de Reed-Solomon utilise. Dans l'exemple présent d'un système DVB-SH utilisant un code de Reed-Solomon de type RS (255, 191, 64), on a : *Ca*=64 ; et
*card*(.) désigne la function cardinal.

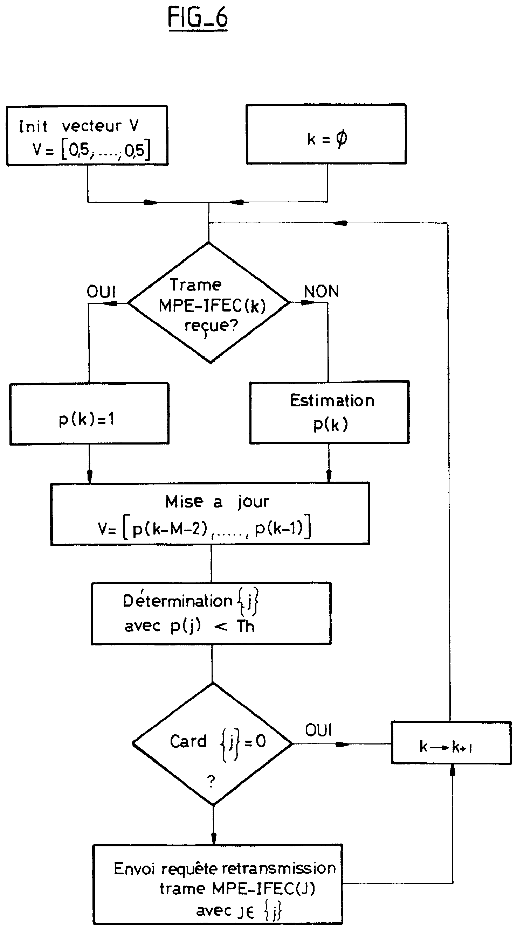

La figure 6 est un exemple d'algorithme pour la mise en oeuvre de l'invention selon un mode de réalisation particulier, qui peut être mis en oeuvre au sein des moyens 407b de traitement couche liaison de données décrits précédemment en coopération avec la mémoire 408.
L'algorithme illustré sur la figure 6 comprend une première étape d'initialisation du vecteur des probabilités de correction des erreurs V = [p(k-M-2),..., p(*k*-1)], ainsi que d'initialisation d'un compteur k. Le vecteur V comprend des estimations p(j) de la probabilité de correction des erreurs affectant les données portées par la trame MPE-IFEC(j), pour les M-1 trames MPE-IFEC précédant la trame MPE-IFEC en cours de traitement dans la séquence d'émission. M correspond à la profondeur d'entrelacement des informations de redondance au sein des trames MPE-IFEC. On a ainsi, en tenant compte de la probabilité p(k), un ensemble de M probabilités de correction des erreurs. On peut par exemple initialiser les éléments du vecteur de probabilités V à la valeur 0.5, et le compteur k à la valeur 0. Cette étape d'initialisation est suivie d'une étape de détection pour déterminer si la trame MPE-IFEC(k) en cours de traitement a été ou non correctement reçue. Si la trame MPE-IFEC(k) en cours de traitement a été correctement reçue, on assigne à la probabilité p(k) de correction des erreurs sur la trame MPE-IFEC(k) en cours de traitement la valeur 1, puis on met le vecteur V à jour en recalculant les estimations des probabilités p(k-1), ..., p(k-M-2) de correction des erreurs sur la trame MPE-IFEC(k-1), ..., MPE-IFEC(k-M-2), respectivement. Si la trame MPE-IFEC(k) en cours de traitement a été incorrectement reçue, on calcule une estimation de la probabilité p(k) de correction des erreurs sur la trame MPE-IFEC(k) en cours de traitement, puis on met le vecteur V à jour en recalculant les estimations des probabilités p(k-1), ..., p(k-M-2) de correction des erreurs sur la trame MPE-IFEC(k-1), ..., MPE-IFEC(k-M-2), respectivement. L'étape de mise à jour du vecteur V est suivie d'une étape de comparaison de chaque élément du vecteur V avec un seuil *Th* prédéterminé. On identifie chaque élément du vecteur V dont la valeur est en-deçà du seuil Th (ce qui signifie que les chances de corriger les erreurs affectant les données portées par la trame MPE-IFEC d'indice correspondant sont jugées trop faibles) pour constituer un ensemble d'indices {j;p(j)⟨Th} répondant à ce critère. Le cardinal de cet ensemble est testé dans une étape suivante. S'il est nul, ce qui signifie que l'on juge suffisantes les chances de corriger les erreurs affectant les données portées par toutes les M-1 trames MPE-IFEC précédant la trame en cours de traitement dans la séquence d'émission, l'indice k est incrémenté pour traiter la trame MPE-IFEC suivante dans la séquence, et l'on retourne à l'étape de détermination si la trame en cours de traitement a été ou non correctement reçue. S'il est non nul, on génère à l'étape suivante une requête de retransmission d'une ou, éventuellement, le cas échéant, plusieurs des trames MPE-IFEC d'indices J appartenant à l'ensemble $\{j;p(j)\langle Th\}$. L'indice k est ensuite incrémenté pour traiter la trame MPE-IFEC suivante dans la séquence, et l'on retourne à l'étape de détermination si la trame en cours de traitement a été ou non correctement reçue.

Cet algorithme permet donc de surveiller les variations des éléments du vecteur V en fonction de la bonne ou mauvaise réception de la trame en cours de traitement. La probabilité de correction des erreurs diminuera lorsque le nombre de trames consécutives perdues augmentera. On pourra donc choisir le seuil Th de manière statistique en le fixant à une valeur en deçà de laquelle il est vérifié statistiquement que le décodeur MPE-IFEC du module 407c échouera dans sa tentative de correction des erreurs. On pourrait par ailleurs, ou en alternative, considérer les variations d'une probabilité p(j), et estimer un gradient de variations de probabilité pour déclencher l'envoi d'une requête de retransmission lorsque la valeur de la probabilité p(j) diminue trop rapidement.

**Revendications**

**1.** Procédé de transmission de données depuis une infrastructure d'un réseau de radiocommunication vers des équipements utilisateur, lesdites données étant portées par une séquence de trames transmises vers les équipements utilisateur, ladite séquence comprenant une première trame comprenant une première section comportant des données et une deuxième section comportant des informations de redondance générées par encodage correcteur d'erreurs et associées aux données d'une deuxième trame précédant la première dans ladite séquence, le procédé comprenant les étapes suivantes, relativement à un équipement utilisateur:

- déterminer si la première trame a été ou non correctement reçue ;
- estimer une grandeur représentative d'une probabilité de correction des erreurs affectant les données portées par une deuxième trame en fonction de ladite détermination ;
- émettre vers l'infrastructure de réseau de radiocommunication une requête de retransmission de la deuxième trame en fonction de la valeur de ladite estimation ;

**caractérisé en ce que**, pour estimer une grandeur représentative d'une probabilité de correction des erreurs affectant les données portées par une deuxième trame en fonction de ladite détermination, il comporte les étapes suivantes ;

- initialiser un compteur $k$ ;
- initialiser un vecteur des probabilités de correction des erreurs V = $\lceil p(k\text{-M-2}),..., p(k\text{-1})\rceil$ dans lequel p(j) est l'estimation de la probabilité de correction des erreurs affectant les données portées par une deuxième trame de rang j, pour les M-1 trames précédant la trame de rang k dans la séquence ; M correspondant à la profondeur d'entrelacement des informations de redondance au sein des trames ;
- déterminer si la trame de rang k a été ou non correctement reçue ;

-- si la trame de rang k a été correctement reçue :

--- assigner la valeur 1 à la probabilité p(k) de correction des erreurs sur la trame de rang k en cours de traitement ;
--- mettre le vecteur V à jour en recalculant les estimations des probabilités p(k-1), ..., p(k-M-2) de correction des erreurs sur les trames de rangs k-1, ..., k-M-2, respectivement ;

-- si la trame de rang k a été incorrectement reçue :

--- calculer une estimation de la probabilité p(k) de correction des erreurs sur la trame de rang k,
--- puis mettre le vecteur V à jour en recalculant les estimations des probabilités p(k-1), ..., p(k-M-2) de correction des erreurs sur les trames de rangs k-1, ..., k-M-2, respectivement ;

- après la mise à jour du vecteur V, comparer chaque élément du vecteur V avec un seuil Th prédéterminé,
- identifier chaque élément du vecteur V dont la valeur est en-deçà du seuil Th ;
- constituer un ensemble d'indices $\{j;p(j)\langle Th\}$ répondant à ce critère ;
- tester le cardinal de cet ensemble :

-- si ce cardinal est nul, incrémenter l'indice k pour traiter la trame suivante dans la séquence, et retourner à l'étape de détermination si la trame en cours de traitement a été ou non correctement reçue ;
-- si ce cardinal est non nul, émettre vers l'infrastructure de réseau de radiocommunication une requête de retransmission d'au moins une trame dont le rang appartient à l'ensemble {j;p(j)⟨Th} ;
- incrémenter ensuite l'indice k pour traiter la trame suivante dans la séquence ;
- et retourner à l'étape de détermination si la trame en cours de traitement a été ou non correctement reçue.

**2.** Procédé selon la revendication 1, dans lequel l'infrastructure de réseau de radiocommunication transmet vers les équipements utilisateur des données portées par une séquence de trames certaines au moins des trames de la séquence comprenant une première section comportant des données et une deuxième section comportant des informations de redondance générées par encodage correcteur d'erreurs et associées aux données d'une pluralité de **M** trames de ladite séquence, M étant supérieur ou égal à deux, et dans lequel on estime une grandeur représentative d'une probabilité de correction des erreurs affectant les données portées par certaines au moins des trames incorrectement reçues ou perdues parmi les M-1, trames précédant la première dans ladite séquence, en fonction de ladite détermination, et on émet vers l'infrastructure de réseau de radiocommunication une requête de retransmission de certaines au moins parmi lesdites M-1 trames en fonction des valeurs respectives d'estimation.

**3.** Procédé selon la revendication 1, dans lequel l'infrastructure de réseau de radiocommunication comprend un premier sous-système d'infrastructure de réseau de radiocommunication et une infrastructure de réseau cellulaire de radiocommunication, et les équipements utilisateur sont aptes à recevoir des données transmises par le premier sous-système d'infrastructure de réseau de radiocommunication et à communiquer avec l'infrastructure de réseau cellulaire de radiocommunication, les trames portant les données étant transmises vers les équipements utilisateur par le premier sous-système d'infrastructure de réseau de radiocommunication, et la requête de retransmission de trame étant émise vers l'infrastructure de réseau cellulaire de radiocommunication.

**4.** Procédé selon la revendication 2, dans lequel le premier sous-système d'infrastructure de réseau de radiocommunication est une infrastructure de réseau de diffusion de contenus multimédia de type DVB-H, DVB-H2, NGH et/ou DVB-SH, et l'infrastructure de réseau cellulaire de radiocommunication est de type UMTS, LTE et/ou WiMAX.

**5.** Procédé selon l'une quelconques des revendications 1 à 4, dans lequel l'infrastructure de réseau de radiocommunication comprend une infrastructure de réseau cellulaire de radiocommunication de type UMTS, LTE ou WiMAX.

**6.** Dispositif de radiocommunication, comprenant des moyens d'émission et des moyens de réception pour communiquer avec une infrastructure d'un réseau de radiocommunication transmettant des données vers des équipements utilisateur, lesdites données étant portées par une séquence de trames transmises vers les équipements utilisateur, ladite séquence comprenant une première trame comprenant une première section comportant des données et une deuxième section comportant des informations de redondance générées par encodage correcteur d'erreurs et associées aux données d'une deuxième trame précédente dans la séquence, le dispositif comprenant en outre :

- des moyens de décodage des trames reçues agencés pour déterminer si la première trame a été ou non correctement reçue ;
- des moyens de traitement agencés pour estimer une grandeur représentative d'une probabilité de correction des erreurs affectant les données portées par une deuxième trame en fonction de ladite détermination ;
- des moyens d'émission agencés pour émettre vers l'infrastructure de réseau de radiocommunication une requête de retransmission de la deuxième trame en fonction de la valeur de ladite estimation ;

**caractérisé en ce que** lesdits moyens de traitement comportent des moyens pour :

- initialiser un compteur *k* ;
- initialiser un vecteur des probabilités de correction des erreurs V = ⌈p(*k*-M-2),..., p(*k*-1)] dans lequel p(j) est l'estimation de la probabilité de correction des erreurs affectant les données portées par une deuxième trame de rang j, pour les M-1 trames précédant la trame de rang k dans la séquence ; M correspondant à la profondeur d'entrelacement des informations de redondance au sein des trames ;
- déterminer si la trame de rang k a été ou non correctement reçue ;

-- si la trame de rang k a été correctement reçue :

--- assigner la valeur 1 à la probabilité p(k) de correction des erreurs sur la trame de rang k en cours de traitement ;
--- mettre le vecteur V à jour en recalculant les estimations des probabilités p(k-1), ..., p(k-M-2) de correction des erreurs sur les trames de rangs k-1, ..., k-M-2, respectivement ;
-- si la trame de rang k a été incorrectement reçue :
--- calculer une estimation de la probabilité p(k) de correction des erreurs sur la trame de rang k,
--- puis mettre le vecteur V à jour en recalculant les estimations des probabilités p(k-1), ..., p(k-M-2) de correction des erreurs sur les trames de rangs k-1, ... , k-M-2, respectivement ;

- après la mise à jour du vecteur V, comparer chaque élément du vecteur V avec un seuil Th prédéterminé,
- identifier chaque élément du vecteur V dont la valeur est en-deçà du seuil Th ;
- constituer un ensemble d'indices $\{j; p(j)\langle Th\}$ répondant à ce critère ;
- tester le cardinal de cet ensemble :

-- si ce cardinal est nul, incrémenter l'indice k pour traiter la trame suivante dans la séquence, et retourner à l'étape de détermination si la trame en cours de traitement a été ou non correctement reçue ;
-- si ce cardinal est non nul, émettre vers l'infrastructure de réseau de radiocommunication une requête de retransmission d'au moins une trame dont le rang appartient à l'ensemble $\{j; p(j)\langle Th\}$;
- incrémenter ensuite l'indice k pour traiter la trame suivante dans la séquence ;
- et retourner à l'étape de détermination si la trame en cours de traitement a été ou non correctement reçue.

**7.** Dispositif selon la revendication 6, dans lequel les moyens de réception et les moyens de décodage sont adaptés pour recevoir des trames d'une séquence de trames transmises par l'infrastructure de réseau de radiocommunication, certaines au moins des trames de la séquence comprenant une première section comportant des données et une deuxième section comportant des informations de redondance générées par encodage correcteur d'erreurs et associées aux données d'une pluralité de M trames de ladite séquence, M étant supérieur ou égal à deux, et dans lequel les moyens de traitement sont adaptés pour estimer une grandeur représentative d'une probabilité de correction des erreurs affectant les données portées par certaines au moins des trames incorrectement reçues ou perdues parmi les M-1, trames précédant la première dans ladite séquence, en fonction de ladite détermination, et les moyens d'émission sont agencés pour émettre vers l'infrastructure de réseau de radiocommunication une requête de retransmission de certaines au moins parmi lesdites M-1 trames en fonction des valeurs respectives d'estimation..

**8.** Dispositif selon l'une quelconque des revendications 6 à 7, dans lequel les moyens d'émission et de réception sont aptes à recevoir des données transmises par un premier sous-système d'infrastructure de réseau de radiocommunication et à communiquer avec une infrastructure de réseau cellulaire de radiocommunication, les moyens de réception et de décodage des trames étant adaptés pour recevoir et décoder des trames portant des données transmises vers des équipements utilisateur par le premier sous-système d'infrastructure de réseau de radiocommunication, et les moyens d'émission vers l'infrastructure de réseau de radiocommunication d'une requête de retransmission étant adaptés pour émettre la requête de retransmission vers l'infrastructure de réseau cellulaire de radiocommunication.

**9.** Dispositif selon l'une quelconque des revendications 6 à 8, dans lequel les moyens d'émission et de réception sont aptes à communiquer avec une infrastructure de réseau cellulaire de radiocommunication de type UMTS, LTE et/ou WiMAX.

**10.** Dispositif selon les revendications 8 et 9, dans lequel les moyens d'émission et de réception sont en outre aptes à recevoir des contenus multimédia diffusés par une infrastructure de réseau de diffusion de contenus multimédia de type DVB-H, DVB-H2, NGH et/ou DVB-SH.

**11.** Station mobile de radiocommunication comprenant un dispositif selon l'une quelconque des revendications 6 à 10.

**12.** Programme d'ordinateur, chargeable dans une mémoire associée à un processeur, et comprenant des instructions pour la mise en oeuvre d'un procédé selon l'une quelconque des revendications 1 à 5 lors de l'exécution dudit programme par le processeur.

**13.** Support informatique sur lequel est enregistré un programme selon la revendication 12.

**Patentansprüche**

1. Verfahren zur Übertragung von Daten von einer Infrastruktur eines Funkkommunikationsnetzwerks an Benutzergeräte, wobei die besagten Daten in einer Sequenz von an die Benutzergeräte übertragenen Rahmen transportiert werden, wobei besagte Sequenz einen ersten Rahmen umfasst, der einen ersten Abschnitt mit Daten und einen zweiten Abschnitt mit Redundanzinformationen umfasst, die generiert werden per Fehlerkorrekturcodierung und die mit den Daten eines zweiten Rahmens assoziiert sind, welcher dem ersten Rahmen in besagter Frequenz vorausgeht, wobei das Verfahren in Bezug auf ein Benutzergerät die folgenden Schritte umfasst:

   - das Bestimmen, ob der erste Rahmen korrekt empfangen wurde oder nicht;
   - das Abschätzen der repräsentativen Größe einer Fehlerkorrekturwahrscheinlichkeit bezüglich der Daten, die von einem zweiten Rahmen transportiert werden, was in Abhängigkeit besagten Bestimmens erfolgt;
   - das Senden einer Anforderung zum Senden des zweiten Rahmens über die Infrastruktur des Funkkommunikationsnetzes in Abhängigkeit von dem Wert des besagten Abschätzens;

   **dadurch gekennzeichnet, dass** das in Abhängigkeit besagten Bestimmens erfolgende Abschätzen der repräsentativen Größe einer Fehlerkorrekturwahrscheinlichkeit bezüglich der Daten, die von einem zweiten Rahmen transportiert werden, die folgenden Schritte umfasst;

   - das Initialisieren eines Zählers $k$;
   - das Initialisieren eines Fehlerkorrekturwahrscheinlichkeitsvektors V = [p($k$-M-2), ..., p($k$-1)] bezüglich der M-1 Rahmen, die in der Sequenz dem Rahmen der Ordnung $k$ vorangehen, wobei p(j) der Schätzung der Fehlerkorrekturwahrscheinlichkeit hinsichtlich der Daten entspricht, welche von einem zweiten Rahmen der Ordnung j transportiert werden; wobei M der Verschachtelungstiefe der Redundanzinformationen innerhalb der Rahmen entspricht;
   - das Bestimmen, ob der Rahmen der Ordnung $k$ korrekt empfangen wurde oder nicht;

      -- wenn der Rahmen der Ordnung $k$ korrekt empfangen wurde:

         --- das Zuweisen des Werts 1 zu der der Fehlerkorrekturwahrscheinlichkeit p($k$) zu dem in Bearbeitung befindlichen Rahmen der Ordnung $k$;
         --- das Aktualisieren des Vektors V durch das Neuberechnen der Fehlerkorrekturwahrscheinlichkeitsschätzungen p($k$-1), ..., p($k$-M-2) jeweils für die Rahmen der Ordnungen $k$-1, ..., $k$-M-2;

      -- wenn der Rahmen der Ordnung $k$ nicht korrekt empfangen wurde:

         --- das Berechnen einer Wahrscheinlichkeitsabschätzung p($k$) für die Fehlerkorrektur im Rahmen der Ordnung $k$,
         --- daraufhin das Aktualisieren des Vektors V durch das Neuberechnen der Fehlerkorrekturwahrscheinlichkeitsschätzungen p($k$-1), ..., p($k$-M-2) jeweils für die Rahmen der Ordnungen $k$-1, ..., $k$-M-2;

   - nach dem Aktualisieren des Vektors V das Vergleichen eines jeden Elements von Vektor V mit einem vordefinierten Schwellenwert Th,
   - das Identifizieren eines jeden Elements von Vektor V, dessen Wert unter dem Schwellenwert Th liegt;
   - das Erstellen einer Gruppe von Indizes {j; p(j)<Th}, die diesem Kriterium entsprechen;
   - das Testen der Elementanzahl dieser Gruppe:

      -- wenn die Elementanzahl gleich Null ist, das Erhöhen des Indizes k, um den nächsten Rahmen der Sequenz zu verarbeiten, und das Zurückkehren zum Schritt des Bestimmens, ob der in Bearbeitung befindliche Rahmen korrekt empfangen wurde oder nicht;
      -- wenn die Elementanzahl ungleich Null ist, das Senden einer Übermittlungsanforderung für mindestens einen solchen Rahmen über das Funkkommunikationsnetzwerk, dessen Ordnung der Gruppe {j; p(j)<Th} angehört;

   - das anschließende Erhöhen des Indizes k, um den nächsten Rahmen der Sequenz zu bearbeiten;
   - und das Zurückkehren zum Schritt des Bestimmens, ob der in Bearbeitung befindliche Rahmen korrekt empfangen wurde oder nicht.

**2.** Verfahren nach Anspruch 1, wobei die Infrastruktur des Funkkommunikationsnetzwerks an die Benutzergeräte Daten überträgt, die von einer Sequenz von Rahmen transportiert wurden, wobei mindestens einige der Rahmen der Sequenz einen ersten, Daten enthaltenden Abschnitt und einen zweiten, Redundanzinformationen enthaltenden Abschnitt umfassen, welche zur Fehlerkorrekturcodierung generiert wurden und mit den Daten einer Vielzahl M von Rahmen besagter Sequenz assoziiert sind, wobei M größer oder gleich zwei ist und wobei eine repräsentative Größe für eine Fehlerkorrekturwahrscheinlichkeit geschätzt wird, welche die Daten betrifft, die von mindestens einigen der Rahmen transportiert werden, die in Funktion besagten Bestimmens unkorrekt erhalten wurden oder unter den M-1 Rahmen verlorengingen, die dem ersten Rahmen besagter Frequenz vorangingen, und wobei an die Funkkommunikationsnetzwerkinfrastruktur eine Anforderung zur Übermittlung mindestens einiger der besagten, M-1 Rahmen in Funktion der entsprechenden Schätzwerte gesendet wird.

**3.** Verfahren nach Anspruch 1, wobei die Infrastruktur des Funkkommunikationsnetzwerks ein erstes Infrastrukturuntersystem des Funkkommunikationsnetzwerks und eine Infrastruktur des zellularen Funkkommunikationsnetzwerks umfasst, und wobei die Benutzergeräte dafür ausgelegt sind, von dem ersten Infrastrukturuntersystem des Funkkommunikationsnetzwerks übertragene Daten zu empfangen und mit der Infrastruktur des zellularen Funkkommunikationsnetzwerks zu kommunizieren, wobei die Rahmen, welche die Daten transportieren, über das erste Infrastrukturuntersystem des Funkkommunikationsnetzwerks an die Benutzergeräte übertragen werden und wobei die Anforderung für die Übertragung von Rahmen über die Infrastruktur des zellularen Funkkommunikationsnetzwerks gesendet wird.

**4.** Verfahren nach Anspruch 2, wobei das erste Infrastrukturuntersystem des Funkkommunikationsnetzwerks eine Netzwerkinfrastruktur zur Verbreitung von Multimediainhalten des Typs DVB-H, DVB-H2, NGH und/oder DVB-SH ist und wobei die Infrastruktur des zellularen Funkkommunikationsnetzwerks vom Typ UMTS, LTE und/oder WiMAX ist.

**5.** Verfahren nach einem jeglichen der Ansprüche 1 bis 4, wobei die Infrastruktur des Funkkommunikationsnetzwerks eine Infrastruktur eines zellularen Funkkommunikationsnetzwerks vom Typ UMTS, LTE und/oder WiMAX umfasst.

**6.** Funkkommunikationsvorrichtung mit Sendemitteln und Empfangsmitteln zum Kommunizieren mit einer Infrastruktur eines Funkkommunikationsnetzwerks, welche Daten an Benutzergeräte überträgt, wobei die besagten Daten in einer Sequenz von an die Benutzergeräte übertragenen Rahmen transportiert werden, wobei besagte Daten von einer Sequenz von Rahmen transportiert werden, die an die Benutzergeräte übertragen werden, wobei besagte Sequenz einen ersten Abschnitt umfasst, der einen ersten Rahmen mit Daten umfasst, sowie einen zweiten Abschnitt mit Redundanzinformationen, die generiert wurden für die Fehlerkorrekturcodierung und die assoziiert sind mit den Daten eines zweiten, in der Sequenz vorangehenden Rahmens, wobei die Vorrichtung weiterhin umfasst:

  - Mittel zur Decodierung empfangener Rahmen, ausgelegt für das Bestimmen, ob der erste Rahmen korrekt empfangen wurde oder nicht;
  - Bearbeitungsmittel für das Abschätzen der repräsentativen Größe einer Fehlerkorrekturwahrscheinlichkeit bezüglich der Daten, die von einem zweiten Rahmen transportiert werden, was in Abhängigkeit besagten Bestimmens erfolgt;
  - Sendemittel, die ausgelegt sind für das Senden einer Anforderung zum Übermitteln des zweiten Rahmens über die Infrastruktur des Funkkommunikationsnetzes in Abhängigkeit von dem Wert des besagten Abschätzens;

**dadurch gekennzeichnet, dass** besagte Bearbeitungsmittel Mittel umfassen, die Folgendes leisten:

  - das Initialisieren eines Zählers $k$;
  - das Initialisieren eines Fehlerkorrekturwahrscheinlichkeitsvektors V = [p($k$-M-2), ..., p($k$-1)] bezüglich der M-1 Rahmen, die in der Sequenz dem Rahmen der Ordnung $k$ vorangehen, wobei p(j) der Schätzung der Fehlerkorrekturwahrscheinlichkeit hinsichtlich der Daten entspricht, welche von einem zweiten Rahmen der Ordnung j transportiert werden; wobei M der Verschachtelungstiefe der Redundanzinformationen innerhalb der Rahmen entspricht;
  - das Bestimmen, ob der Rahmen der Ordnung $k$ korrekt empfangen wurde oder nicht;

    -- wenn der Rahmen der Ordnung $k$ korrekt empfangen wurde:

      --- das Zuweisen des Werts 1 zu der der Fehlerkorrekturwahrscheinlichkeit p($k$) zu dem in Bearbeitung befindlichen Rahmen der Ordnung $k$;
--- das Aktualisieren des Vektors V durch das Neuberechnen der Fehlerkorrekturwahrscheinlichkeitsschätzungen p($k$-1), ..., p($k$-M-2) jeweils für die Rahmen der Ordnungen $k$-1, ..., $k$-M-2;

-- wenn der Rahmen der Ordnung $k$ nicht korrekt empfangen wurde:

--- das Berechnen einer Wahrscheinlichkeitsabschätzung p($k$) für die Fehlerkorrektur im Rahmen der Ordnung $k$,
--- daraufhin das Aktualisieren des Vektors V durch das Neuberechnen der Fehlerkorrekturwahrscheinlichkeitsschätzungen p($k$-1), ..., p($k$-M-2) jeweils für die Rahmen der Ordnungen $k$-1, ..., $k$-M-2;

- nach dem Aktualisieren des Vektors V das Vergleichen eines jeden Elements von Vektor V mit einem vordefinierten Schwellenwert Th,
- das Identifizieren eines jeden Elements von Vektor V, dessen Wert unter dem Schwellenwert Th liegt;
- das Erstellen einer Gruppe von Indizes {j; p(j)<Th}, die diesem Kriterium entsprechen;
- das Testen der Elementanzahl dieser Gruppe:

-- wenn die Elementanzahl gleich Null ist, das Erhöhen des Indizes $k$, um den nächsten Rahmen der Sequenz zu verarbeiten, und das Zurückkehren zum Schritt des Bestimmens, ob der in Bearbeitung befindliche Rahmen korrekt empfangen wurde oder nicht;
-- wenn die Elementanzahl ungleich Null ist, das Senden einer Übermittlungsanforderung für mindestens einen solchen Rahmen über das Funkkommunikationsnetzwerk, dessen Ordnung der Gruppe {j; p(j)<Th} angehört;

- das anschließende Erhöhen des Indizes $k$, um den nächsten Rahmen der Sequenz zu bearbeiten;
- und das Zurückkehren zum Schritt des Bestimmens, ob der in Bearbeitung befindliche Rahmen korrekt empfangen wurde oder nicht.

7.  Vorrichtung nach Anspruch 6, wobei die Empfangsmittel und die Decodiermittel ausgelegt sind für den Empfang von Rahmen einer Sequenz von Rahmen, die von der Infrastruktur des Funkkommunikationsnetzwerks übertragen werden, wobei mindestens einige der Rahmen der Sequenz einen ersten, Daten enthaltenden Abschnitt und einen zweiten, Redundanzinformationen enthaltenden Abschnitt umfassen, welche zur Fehlerkorrekturcodierung generiert wurden und mit den Daten einer Vielzahl M von Rahmen besagter Sequenz assoziiert sind, wobei M größer oder gleich zwei ist und wobei die Bearbeitungsmittel ausgelegt sind für das Schätzen einer repräsentative Größe für eine Fehlerkorrekturwahrscheinlichkeit, welche die Daten betrifft, die von mindestens einigen der Rahmen transportiert werden, die in Funktion besagten Bestimmens unkorrekt erhalten wurden oder unter den M-1 Rahmen verlorengingen, die dem ersten Rahmen besagter Frequenz vorangingen, und wobei die Sendemittel dafür ausgelegt sind, um an die Funkkommunikationsnetzwerkinfrastruktur in Funktion der entsprechenden Schätzwerte eine Anforderung zur Übermittlung mindestens einiger der besagten, M-1 Rahmen zu senden.

8.  Vorrichtung nach einem beliebigen der Ansprüche 6 bis 7, wobei die Sende- und Empfangsmittel dafür ausgelegt sind, Daten zu empfangen, die von einem ersten Infrastrukturuntersystem des Funkkommunikationsnetzwerks übertragen werden, und mit der Infrastruktur des zellularen Funkkommunikationsnetzwerks zu kommunizieren, wobei die Mittel zum Empfangen und Decodieren von Rahmen dafür ausgelegt sind, Rahmen zu empfangen und zu decodieren, welche die von dem ersten Infrastrukturuntersystem des Funkkommunikationsnetzwerks an Benutzergeräte übertragenen Daten transportieren, und wobei die Mittel zum Senden einer Anforderung für die Übertragung an die Infrastruktur des Funkkommunikationsnetzwerks dafür ausgelegt sind, die Anforderung für die Übertragung an die Infrastruktur des zellularen Funkkommunikationsnetzwerks zu senden.

9.  Vorrichtung nach einem jeglichen der Ansprüche 6 bis 8, wobei die Sende- und Empfangsmittel ausgelegt sind für das Kommunizieren mit der Infrastruktur eines zellularen Funkkommunikationsnetzwerks des Typs UMTS, LTE und/oder WiMAX.

10. Vorrichtung nach den Ansprüchen 8 und 9, wobei die Sende- und Empfangsmittel unter anderem ausgelegt sind für den Empfang von Multimediainhalten, die für eine Netzwerkinfrastruktur zur Verbreitung von Multimediainhalten des Typs DVB-H, DVB-H2, NGH und/oder DVB-SH verbreitet werden.

11. Mobile Funkkommunikationsstation mit einer Vorrichtung gemäß einem jeglichen der Ansprüche 6 bis 10.

**12.** Computerprogramm, welches in einen einem Prozessor zugeordneten Speicher geladen werden kann und Befehle für die Durchführung eines Verfahrens gemäß eines jeglichen der Ansprüche 1 bis 5 bei Ausführen des besagten Programms durch den Prozessor umfasst.

**13.** Datenträger, auf welchem ein Programm gemäß Anspruch 12 gespeichert wird.

**Claims**

**1.** A method for transmitting data from an infrastructure of a radio communication network to user devices, said data being carried by a sequence of frames transmitted to the user devices, said sequence comprising a first frame comprising a first section including data and a second section including redundancy information generated by error correction encoding and associated with data of a second frame preceding the first in said sequence, the method comprising the following steps, with respect to a user device:

- determining whether the first frame was or was not correctly received;
- estimating a value representative of a probability of correcting errors affecting data carried by a second frame based on said determination;
- sending to the radio communication network infrastructure a request to retransmit the second frame based on the value of said estimate;

**characterized in that** in order to estimate a value representative of a probability of correcting errors affecting data carried by a second frame based on said determination, it comprises the following steps;

- initializing a counter $k$;
- initializing a vector of error correction probabilities V = [p($k$-M-2), ..., p($k$-1)] wherein p(j) is the estimate of the probability of correcting errors affecting the data carried by a second frame of rank j, for the M-1 frames preceding the frame of rank k in the sequence; M corresponding to the interlacing depth of the redundancy information within the frames;
- determining whether the frame of rank k was or was not correctly received;

-- if the frame of rank k was correctly received:

--- assigning the value 1 to the error correction probability p(k) on the frame of rank k currently being processed;
--- updating the vector V by recalculating the estimates of the error correction probabilities p(k-1), ..., p(k-M-2) on the frames of ranks k-1, ..., k-M-2, respectively;

-- if the frame of rank k was incorrectly received:

--- calculating an estimate of the error correction probability p(k) on the frame of rank k,
--- then updating the vector V by recalculating the estimates of the error correction probabilities p(k-1), ..., p(k-M-2) on the frames of ranks k-1, ..., k-M-2, respectively;

- after the updating of the vector V, comparing each element of the vector V with a predetermined threshold Th,
- identifying each element of the vector V whose value is below the threshold Th;
- composing a set of indices {j;p(j)<Th} meeting that criterion;
- testing the cardinal of that set:

-- if that cardinal is null, incrementing the index k to process the next frame in the sequence, and returning to the determination step if the frame currently being processed was or was not correctly received;
-- if that cardinal is non-null, sending the radio communication network infrastructure a request to retransmit at least one frame whose rank belongs to the set {j; p(j)<Th};
- next incrementing the index k to process the next frame in the sequence;
- and returning to the determination step if the current processing frame was or was not correctly received.

**2.** A method according to claim 1, wherein the radio communication network infrastructure transmits to the user devices data carried by a sequence of frames, at least some of the frames of the sequence comprising a first section including data and a second section including redundancy information generated by error correction encoding and associated with a plurality of **M** frames of said sequence, M being greater than or equal to two, and wherein a value representative of a probability of correcting errors affecting data carried by at least some of the frames incorrectly received or lost from among the M-1 frames preceding the first in said sequence is estimated, and a request is sent to said radio communication network infrastructure to retransmit at least some of said M-1 frames based on the respective estimate values.

3. A method according to claim 1, wherein the radio communication network infrastructure comprises a first radio communication network infrastructure subsystem and a cellular radio communication network infrastructure, and the user devices are able to receive data transmitted by the first radio communication network infrastructure subsystem and to communicate with the cellular radio communication network infrastructure, the frames carrying the data being transmitted to the user devices by the first radio communication network infrastructure subsystem, and the request to retransmit frames being sent to the cellular radio communication network infrastructure.

4. A method according to claim 2, wherein the first radio communication network infrastructure subsystem is a network infrastructure for broadcasting multimedia content of the DVB-H, DVB-H2, NGH and/or DVB-SH type, and the cellular radio communication network infrastructure is of the UMTS, LTE, and/or WiMAX type.

5. A method according to any one of the claims 1 to 4, wherein the radio communication network infrastructure comprises a cellular radio communication network infrastructure of the UMTS, LTE, and/or WiMAX type.

6. A radio communication device, comprising means of sending and means of receiving for communicating with a radio communication network infrastructure transmitting data to user devices, said data being carried by a sequence of frames transmitted to user devices, said sequence comprising a first frame comprising a first section including data and a second section including redundancy information generated by error correction encoding and associated with data of a preceding second frame in said sequence, the device further comprising:

   - means for decoding the received frames, arranged to determine whether the first frame was or was not correctly received;
   - processing means arranged to estimate a value representative of a probability of correcting errors affecting data carried by a second frame based on said determination;
   - sending means arranged to send to the radio communication network infrastructure a request to retransmit the second frame based on the value of said estimate;

   **characterized in that** said processing means comprise means for:

   - initializing a counter $k$;
   - initializing a vector of error correction probabilities V = [p($k$-M-2), ..., p($k$-1)] wherein p(j) is the estimate of the probability of correcting errors affecting the data carried by a second frame of rank j, for the M-1 frames preceding the frame of rank k in the sequence; M corresponding to the interlacing depth of the redundancy information within the frames;
   - determining whether the frame of rank k was or was not correctly received;

      -- if the frame of rank k was correctly received:

         --- assigning the value 1 to the error correction probability p(k) on the frame of rank k currently being processed;
         --- updating the vector V by recalculating the estimates of the error correction probabilities p($k$-1), ..., p(k-M-2) on the frames of ranks k-1, ..., k-M-2, respectively;

      -- if the frame of rank k was incorrectly received:

         --- calculating an estimate of the error correction probability p(k) on the frame of rank k,
         --- then updating the vector V by recalculating the estimates of the error correction probabilities p($k$-1), ..., p(k-M-2) on the frames of ranks k-1, ..., k-M-2, respectively;

   - after the updating of the vector V, comparing each element of the vector V with a predetermined threshold Th,
   - identifying each element of the vector V whose value is below the threshold Th;

- composing a set of indices $\{j; p(j)<Th\}$ meeting that criterion;
- testing the cardinal of that set:

-- if that cardinal is null, incrementing the index k to process the next frame in the sequence, and returning to the determination step if the frame currently being processed was or was not correctly received;
-- if that cardinal is non-null, sending the radio communication network infrastructure a request to retransmit at least one frame whose rank belongs to the set $\{j; p(j)<Th\}$;
- next incrementing the index k to process the next frame in the sequence;
- and returning to the determination step if the current processing frame was or was not correctly received.

7. A device according to claim 6, wherein the means of receiving and the means of decoding are adapted to receive frames of a sequence of frames transmitted by the radio communication network infrastructure, at least some of the frames of the sequence comprising a first section including data and a second section including redundancy information generated by error correction encoding and associated with a plurality of M frames of said sequence, M being greater than or equal to two, and wherein the processing means are adapted to estimate a value representative of a probability of correcting errors affecting data carried by at least some of the frames incorrectly received or lost from among the M-1 frames preceding the first in said sequence, and the sending means are arranged to send to the radio communication network infrastructure a request to retransmit at least some of said M-1 frames based on the respective estimate values.

8. A device according to any one of the claims 6 to 8, wherein the means of sending and receiving are able to receive data transmitted by a first radio communication network infrastructure subsystem and to communicate with a cellular radio communication network infrastructure, the means of receiving and decoding the frames being adapted to receive and decode frames carrying data transmitted to user devices by the first radio communication network infrastructure subsystem, and the means for sending to the radio communication network infrastructure a request to retransmit being adapted to send the retransmission request to the cellular radio communication network infrastructure.

9. A device according to any one of the claims 6 to 8, wherein the means of sending and receiving are able to communicate with a cellular radio communication network infrastructure of the UMTS, LTE and/or WiMAX type.

10. A device according to claims 8 and 9, wherein the means of sending and receiving are also able to receive multimedia content broadcast by a multimedia content broadcast network infrastructure of the DVB-H, DVB-H2, NGH and/or DVB-SH type.

11. A mobile radio communication station comprising a device according to any one of the claims 6 to 10.

12. A computer program, loadable in a memory associated with a processor, and comprising instructions for implementing a method according to any one of the claims 1 to 5 when said program is run by the processor.

13. A computing medium on which is saved a program according to claim 12.

FIG_1

## FIG_2

Flux IP → [ **MPE** 202 ] → Section_MPE(k-D) → [ **TS** 204 ] →

[ **MPE** 202 ] → Section_MPE(k) → [ **Encodage FEC** 203 ] → Bloc IFEC(k) → [ **TS** 204 ]

Sortie

| Section_MPE(k-D) | Bloc IFEC(k) | (...) |

→ MPE-IFEC(k-2)

→ MPE-IFEC(k-1)

Trame MPE-IFEC(k)

EP 2 436 134 B1

## FIG_3

| Octets de bourrage(fin) | |
| --- | --- |
| Octets de bourrage(suite) | |
| Octets de bourrage(suite) | |
| Octets de bourrage(suite) | |
| dernier datagramme (fin) | bourrage |
| | |
| 3ème datagramme (suite) | |
| 2e data.(fin) · 3ème datagramme | |
| 2ème datagramme(suite) | |
| 1er datagramme(suite) | 2ème data. |
| 1er datagramme | |

Colonnes 0 à C-1

Lignes 0 à T-1

## FIG_4a

ADST(k)

Section MPE #k   →

Sub-ADST(k,3)

Sub-ADST(k,2)

Sub-ADST(k,1)

## FIG_4b

0          C-1    0       N-1

0

Code RS(255, 191,64)

ADT(k)

FDT

600

T-1

601

602

Sub-ADST(k,1)

Sub-ADST(k+B-1,1)

## FIG_4c

| | EM(0) | EM(1) | EM(2) | EM(3) | EM(4) | EM(5) | EM(0) | EM(1) | EM(2) | EM(3) | EM(4) |
|---|---|---|---|---|---|---|---|---|---|---|---|
| k = 0 | D1 | D2 | D3 | D4 | F1 | F2 | | | | | |
| k = 1 | | D5 | D6 | D7 | D8 | F3 | F4 | | | | |
| k = 2 | | | D9 | D10 | D11 | D12 | F5 | F6 | | | |
| k = 3 | | | | D13 | D14 | D15 | D16 | F7 | F8 | | |
| k = 4 | | | | | D17 | D18 | D19 | D20 | F9 | F10 | |
| k = 5 | | | | | | D21 | D22 | D23 | D24 | F11 | F12 |

## FIG_4d

| | EM(0) | EM(1) | EM(2) | EM(3) | EM(4) | EM(5) |
|---|---|---|---|---|---|---|
| k = 0 | D1 | D2 | D3 | D4 | F1 | F2 |
| k = 1 | F4 | D5 | D6 | D7 | D8 | F3 |
| k = 2 | F5 | F6 | D9 | D10 | D11 | D12 |
| k = 3 | D16 | F7 | F8 | D13 | D14 | D15 |
| k = 4 | D19 | D20 | F9 | F10 | D17 | D18 |
| k = 5 | D22 | D23 | D24 | F11 | F12 | D21 |

## FIG_5

# FIG_6

Init vecteur V
$V = [0,5, ...., 0,5]$

$k = \emptyset$

Trame MPE-IFEC(k) reçue?

OUI → $p(k)=1$

NON → Estimation $p(k)$

Mise a jour
$V = [p(k-M-2), ......, p(k-1)]$

Détermination $\{j\}$
avec $p(j) < Th$

Card $\{j\} = 0$ ?

OUI → $k \rightarrow k+1$

Envoi requête retransmission
trame MPE-IFEC(J)
avec $J \in \{j\}$

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006128422 A

- WO 9930462 A

**Littérature non-brevet citée dans la description**

- A satellite based multicast layer architecture for mobile networks to provide efficient spectrum usage of IMT2000 bands. Alcatel, Janvier 2002

- **D. GOMEZ-BARQUERO et al.** Affordable mobile TV services in hybrid cellular and DVB-H systems. IEEE Network, Avril 2007, vol. 21, 34-40